# EUROPÄISCHE PATENTSCHRIFT

(11) **EP 2 617 605 B1**
(45) Veröffentlichungstag und Bekanntmachung des Hinweises auf die Patenterteilung: **24.05.2017**
(21) Anmeldenummer: 12007839.9
(22) Anmeldetag: 21.11.2012
(51) Int. Cl.: B60R 21/01, B60R 21/0136, B60R 21/36, B60R 21/38

(54) **Verfahren zum Betrieb eines Fußgängerschutzsystems**
Method for operating a pedestrian protection system
Procédé d'opération d'un système de protection de piétons

(30) Priorität: 17.01.2012 DE 102012000792
(43) Veröffentlichungstag der Anmeldung: 24.07.2013
(73) Patentinhaber: AUDI AG, 85045 Ingolstadt (DE)
(72) Erfinder: Stoll, Johann, 85123 Karlskron (DE); Roth, Franz, 93336 Altmannstein (DE); Garcia De Caceres, Carlos, 80804 München (DE); Horz, Verena, 85049 Ingolstadt (DE)
(74) Vertreter: Thielmann, Frank

(56) Entgegenhaltungen:
- DE-A1- 10 141 730
- DE-A1- 10 355 344
- GB-A- 2 400 352
- GB-A- 2 400 353
- JP-A- 2007 296 941
- US-A1- 2009 289 471

## Beschreibung

Die Erfindung betrifft ein Verfahren zum Betrieb eines Fußgängerschutzsystems zur Unfallschwereminderung bei Frontalkollisionen mit Fußgängern in einem Kraftfahrzeug, wobei wenigstens ein Sicherheitssystem in Abhängigkeit wenigstens einer Auslösebedingung, die Messdaten wenigstens einer Erfassungseinrichtung auswertet, ausgelöst wird. Daneben betrifft die Erfindung ein Kraftfahrzeug mit einem Fußgängerschutzsystem.

Zum Schutz von Fußgängern bei einem Frontalunfall mit Kraftfahrzeugen werden heutzutage verschiedene, durch Sicherheitssysteme realisierte Maßnahmen vorgeschlagen, insbesondere passive Maßnahmen. Dabei sind Fußgängerschutzsysteme bekannt, bei denen als Erfassungseinrichtungen ein oder mehrere Kollisionssensoren (Kontaktsensoren) im Frontalbereich (Frontend) des Kraftfahrzeugs verbaut sind. Diese Kollisionssensoren detektieren in der Regel einen Aufprall eines Fußgängers oder eines beliebigen Gegenstandes. Eine entsprechende Algorithmik wertet verschiedene Merkmale der Messdaten (Sensorsignale) aus und entscheidet anhand einer Auslösebedingung, die auch verschiedene, verschachtelte Kriterien umfassen kann, ob ein Sicherheitssystem insbesondere als passive Maßnahme ausgelöst werden soll.

Als mögliches Sicherheitssystem offenbart beispielsweise die DE 10 2005 012 136 A1 ein Fußgänger-Airbagsystem, das einen im Bereich der Windschutzscheibe aufzublasenden Außenairbag beschreibt. Das Fußgänger-Airbagsystem ist nahe der Hinterkante der Motorhaube eines Kraftfahrzeugs an diese montierbar und kann durch eine Auslösebedingung entsprechend ausgelöst werden. Auch DE 100 13 563 A1 und DE 10 2007 029 987 B4 offenbaren solche Windschutzscheiben-Außenairbags, die sich über die Windschutzscheibe eines Kraftfahrzeugs legen, um dort den Aufprall eines Fußgängers dämpfen zu können. Diese Veröffentlichungen zeigen zudem auch ein zweites, bekanntes Sicherheitssystem zum Fußgängerschutz; nämlich eine anstellbare Motorhaube des Kraftfahrzeugs, welche zum Schutz des Fußgängers um einen bestimmten Winkel geöffnet wird. DE 10 2005 012 357 A1 beschreibt als weiteres Sicherheitssystem eine Höhenverstellungseinheit, die, während eine Hebeeinheit eine Motorhaube des Kraftfahrzeugs anhebt, das Kraftfahrzeug so absenkt, dass der Fußgänger auf die Motorhaube gelenkt und durch einen Windschutzscheiben-Außenairbag geschützt wird.

Problematisch hierbei ist, dass die Sensoren keine sichere Klassifikation bezüglich eines realen Fußgängers ausgeben können und die Algorithmen auch auf das Auslösen eines Ersatzimpaktors ausgelegt sind, so dass die oben genannten Maßnahmen bzw. Sicherheitssysteme auch fälschlicherweise ausgelöst werden können, wenn der Eintrag eines Objekts im Frontend des Kraftfahrzeugs dem eines Fußgängers oder eines Ersatzimpaktors ähnlich ist. Auch optische Erfassungseinrichtungen, insbesondere optische Sensoren, können üblicherweise nicht mit hinreichender Sicherheit die Klasse "Fußgänger" identifizieren, so dass es zu Fehlauslösungen kommen kann.

Zwar können bei reversiblen Maßnahmen, also Sicherheitssystemen, bei denen die Aktuatoren auch zur Zurückstellung des ausgelösten Sicherheitssystems ausgebildet sind, Falschauslösungen noch akzeptiert werden, da sie vom Fahrer selbst oder einer entsprechenden Werkstatt problemlos zurückgestellt werden können, beispielsweise im Fall einer rückstellbaren crashaktiven Motorhaube. Allerdings wird ein falsch ausgelöstes Sicherheitssystem, insbesondere ein Außenairbag, vermutlich vom Fahrer bemängelt werden. Zudem besteht bei einem falsch ausgelösten Außenairbag an der Windschutzscheibe das Problem, dass die Sicht des Fahrers verdeckt werden kann.

Dabei kann es beispielsweise bei der Auswertung von optischen Messdaten zu Falschauslösungen durch fliegende Plastiktüten, Vögel, Äste und dergleichen kommen, wobei bei einem Kontaktsensor bzw. Kollisionssensor im Frontend eine Falschauslösung bei Kleintieren, Wild, fliegenden Plastiktüten, Steckpfosten, Leitbaken, Bällen und dergleichen auftreten kann.

Um die Gefahr der Falschauslösung zu reduzieren, wurde durch DE 10 2005 006 763 A1 vorgeschlagen, eine erste berührungslose Sensoreinrichtung und eine eine Krafteinwirkung eines Objekts beim Aufprall auf das Kraftfahrzeug erfassende zweite Sensoreinrichtung vorzusehen. So sollen zwei unabhängige Sensoren jeweils ein Ereignis bestätigten, um Falschauslösungen zu vermeiden. Konkret wird dort vorgeschlagen, basierend auf der Krafteinwirkung und der Relativgeschwindigkeit eine Masse-kennzeichnende und/oder eine Härte-kennzeichnende Größe des ersten Objekts zu schätzen und das Objekt als bestimmten Objekttyp zu erkennen, wenn die geschätzte Masse-kennzeichnende und/oder Härte-kennzeichnende Größe innerhalb eines vorgegebenen Bereichs liegt. Dabei ist jedoch eine äußerst komplexe Auswertungsalgorithmik notwendig, die selbst wieder anfällig für Fehler ist und eine Vielzahl von Merkmalen der Messdaten komplex verknüpfen muss, insbesondere auch im Hinblick auf Kriterien der Auslösebedingung.

Aus D1 (GB 2 400 352 A) ist ein Fußgängererkennungssystem für Kraftfahrzeuge bekannt. In diesem System empfängt ein Controller Eingangssignale von mehreren Sensoren am Kraftfahrzeug. Einer dieser Sensoren kann ein Sensor sein, der wenigstens einen halben Meter vom Vorderbereich des Kraftfahrzeugs beabstandet ist, beispielsweise eine Kamera. Der zweite Sensor kann ein Kontaktsensor sein. Erfasst der Sensor ein Objekt nicht, da es beispielsweise durch die Motorhaube des Kraftfahrzeugs verdeckt ist, so wird das Fußgängererkennungssystem nicht ausgelöst.

D3 (DE 101 41 730 A1) beschreibt ein Verfahren zum Schutz lebender Objekte bei einem Zusammenstoß mit einem Fahrzeug. Es werden Parameter von Objekten im Nahbereich, wie Außenabmaße, Schwerpunktslage und Kopfposition, erfasst, und am Fahrzeug vorgesehene Schutzmittel werden dann entsprechend in Abhängigkeit der zu erwartenden Art des Auftreffens des Objektes auf der Fahrbahn gesteuert. Die Auslösung einiger Schutzmittel, wie beispielsweise Fangnetze oder Airbags, kann vom erwarteten Auftreffen des Objekts auf der Fahrbahn abhängig gemacht werden.

Der Erfindung liegt daher die Aufgabe zugrunde, ein Verfahren zum Betrieb eines Fußgängerschutzsystems anzugeben, bei welchem auf einfache Weise eine Verbesserung der Plausibilisierung der Auslösebedingung realisiert werden kann.

Zur Lösung dieser Aufgabe ist bei einem Verfahren der eingangs genannten Art erfindungsgemäß vorgesehen, dass die Auslösebedingung ein die Überschreitung eines Höhenschwellwerts durch wenigstens eine aus Messdaten einer optischen Erfassungseinrichtung bestimmte Höhe eines Kollisionsobjekts auswertendes Höhenkriterium umfasst.

Erfindungsgemäß wird also vorgeschlagen, dass eine optische Erfassungseinrichtung, insbesondere ein optischer Sensor, Messdaten liefert, aus denen die Höhe des Kollisionsobjekts zumindest abgeschätzt werden kann. Besonders geeignet sind hierfür dreidimensionale Erfassungseinrichtungen, da sich dann auf besonders einfache Weise die Höhe eines Kollisionsobjekts bestimmen lässt. Denkbar ist es jedoch auch, durch die Anordnung der optischen Erfassungseinrichtung beispielsweise auf der Höhe der Motorhaube eine rein durch den Erfassungsbereich realisierte Monokamera-Ausgestaltung zu erzielen, da im genannten Beispiel dann nur Objekte wahrgenommen werden können, die die Motorhaube ohnehin überragen. So kann beispielsweise festgestellt werden, ob beim Kollisionsobjekt überhaupt die Gefahr besteht, dass dieses auf die Motorhaube und von dort weiter zur Windschutzscheibe gelangt, beispielsweise überklappt, so dass die Auslösebedingung in Abhängigkeit eines Höhenkriteriums zumindest modifiziert werden kann.

Die hier vorgeschlagene Hinzufügung eines Höhenkriteriums zu der Auslösebedingung ist einfach zu realisieren und benötigt keine aufwendige Sensorik, an die komplexe technische Anforderungen gestellt werden müssen.

Im Rahmen der Auslösebedingung werden Messdaten von wenigstens zwei auf unterschiedlichen Prinzipien basierenden Erfassungseinrichtungen, insbesondere der optischen Erfassungseinrichtung und wenigstens eines bei Berührung mit einem Kollisionsobjekt ansprechenden Kollisionssensors, ausgewertet. In diesem Fall dient das Höhenkriterium letztlich zur Plausibilisierung eines Fußgängerunfalls, nachdem neben der optischen Erfassungseinrichtung noch wenigstens eine weitere, auf einem unterschiedlichen Messprinzip basierende Erfassungseinrichtung vorliegt, deren Messdaten ebenso in der wenigstens einen Auslösebedingung berücksichtigt werden. Bei der weiteren Erfassungseinrichtung handelt es sich zweckmäßigerweise um die heutzutage ohnehin häufig vorgesehenen Kollisionssensoren, die auf verschiedene Art und Weise einen Kontakt eines Objekts mit dem Kraftfahrzeug vermessen können. In einem konkreten Realisierungsbeispiel können Beschleunigungssensoren am Stoßfänger des Kraftfahrzeugs vorgesehen werden und/oder Kontaktsensoren wie Lichtleitfasern, kraftsensitive Sensoren und dergleichen eingesetzt werden. Verschiedenste, aus dem Stand der Technik grundsätzlich bekannte Möglichkeiten sind denkbar.

Bei der vorliegenden Erfindung wird bei Erfüllung des Höhenkriteriums wenigstens ein Schwellwert eines die Messdaten der weiteren Erfassungseinrichtung betreffenden Kriteriums der Auslösebedingung zum leichteren Auslösen des Sicherheitssystems angepasst. In dieser Ausgestaltung wird das Höhenkriterium also zur weiteren Plausibilisierung dahingehend eingesetzt, dass Schwellwerte, die insbesondere des Auslösen des Sicherheitssystems in Abhängigkeit der Messdaten der weiteren Erfassungseinrichtung bestimmen, angepasst werden. Hierbei kann beispielsweise vorgesehen sein, dass die Messdaten der Kollisionssensoren bereits bei einem leichteren Kontakt das sie betreffende Kriterium erfüllen, wenn die Höhe den Höhenschwellwert überschreitet, während dann, wenn das Höhenkriterium nicht erfüllt ist, eindeutig ein größeres und/oder schwereres und/oder schnelleres Objekt betreffende Messdaten von Kollisionssensoren vorliegen müssen und dergleichen.

Es sei an dieser Stelle angemerkt, dass selbstverständlich auch andere Möglichkeiten zur Berücksichtigung des Höhenkriteriums im Rahmen der Auslösebedingung möglich sind. Beispielsweise kann das Höhenkriterium UND-verknüpft mit einem die Messdaten der weiteren Erfassungseinrichtung betreffenden Kriterium vorliegen, oder es kann eine Auswertung der Messdaten der optischen Erfassungseinrichtung und der weiteren Erfassungseinrichtung zu einem gemeinsamen Kollisionswert erfolgen, welcher dann gegen ein das Höhenkriterium implizit umfassendes Kriterium ausgewertet wird und dergleichen.

In weiterer Ausgestaltung der vorliegenden Erfindung kann vorgesehen sein, dass der Höhenschwellwert als die Höhe eines ausgezeichneten Punktes der Motorhaube des Kraftfahrzeugs über dem Boden gewählt wird, insbesondere eines vorderen Endes der Motorhaube über dem Boden. In diesem Fall ist das Höhenkriterium also immer dann erfüllt, wenn das Kollisionsobjekt höher ist als die vordere Motorhaubenkante, also die Gefahr eines Überklappens auf die Motorhaube überhaupt besteht. Eine derartige Höhenabschätzung hat sich als besonders nützlich erwiesen, um insbesondere Objekte, die niedriger als die Motorhaube sind, auszuschließen.

Als optische Erfassungseinrichtung kann mit besonderem Vorteil eine dreidimensionale optische Erfassungseinrichtung verwendet werden, bei der mithin einzelnen Bildpunkten auch eine Entfernung zugeordnet ist. Auf diese Weise kann die Höhe deutlich einfacher bestimmt werden, nachdem die Tiefeninformation gegeben ist. In einem bevorzugten Ausführungsbeispiel wird dabei als dreidimensionale optische Erfassungseinrichtung eine PMD-Kamera verwendet. Derartige, häufig auch als TOF-Kameras (Time-of-Flight-Kameras) bezeichnete PMD-Kameras liefern zu jedem Bildpunkt neben einer optischen Information auch eine Abstandsinformation, die dann unmittelbar verarbeitet werden kann. Dabei sind PMD-Kameras äußerst schnell. Denkbar sind jedoch auch Stereokamera, bei denen eine Entfernungsinformation aus zwei unter unterschiedlichen Winkeln aufgenommenen Bildern rückgerechnet wird, wobei es jedoch auch möglich ist, eine Monokamera zu verwenden, der eine den optischen Fluss der Messdaten auswertende Auswerteeinrichtung zugeordnet ist. Algorithmen, die es erlauben, aus dem zeitlichen Verlauf von Kamerabildern auf den optischen Fluss und hieraus auf eine Entfernung zu schließen, sind im Stand der Technik bereits bekannt.

In weiterer Ausgestaltung der vorliegenden Erfindung kann vorgesehen sein, dass die optische Erfassungseinrichtung im Bereich einer Windschutzscheibe des Kraftfahrzeugs angeordnet ist, insbesondere am oberen Rand der Windschutzscheibe und/oder im Inneren des Kraftfahrzeugs. Beispielsweise kann vorgesehen werden, die optische Erfassungseinrichtung in Fahrtrichtung des Kraftfahrzeugs gerichtet in einem Rückspiegel oder einer Rückspiegelhalterung vorzusehen, jedoch sind auch sonstige, insbesondere zentrale Einbauorte am oberen Rand der Windschutzscheibe denkbar. Auch andere Verbauorte im Bereich der Windschutzscheibe sind jedoch möglich, beispielsweise an den A-Säulen, in den Außenspiegeln und dergleichen. Grundsätzlich ist auch eine Verbauung an der Motorhaube denkbar, beispielsweise windschutzscheibenseitig, so dass beispielsweise ohnehin nur über die Motorhaube ragende Objekte sichtbar sind. In einer alternativen Ausgestaltung ist die optische Erfassungseinrichtung an der vorderen Kante der Motorhaube vorgesehen.

Dabei sei an dieser Stelle noch angemerkt, dass der Erfassungsbereich dabei so gewählt werden sollte, dass alle für einen Frontalaufprall auf dem Kraftfahrzeug geeigneten Objekte auch detektiert werden können.

In weiterer vorteilhafter Ausgestaltung der vorliegenden Erfindung kann vorgesehen sein, dass aus den Messdaten der optischen Erfassungseinrichtung auch ein Kollisionsobjekttyp ermittelt und zur Anpassung wenigstens eines Kriteriums der Auslösebedingung verwendet wird. In dieser Ausgestaltung werden die Messdaten der optischen Erfassungseinrichtung mithin auch über die Höhe von Objekten hinaus weitergehend ausgewertet, beispielsweise, um eine Klassifikation von möglichen oder tatsächlichen Kollisionsobjekten zu ermöglichen und mithin eine weitere Plausibilisierungsebene zu schaffen, indem beispielsweise überprüft wird, ob ein Köllisionsobjekt ein Fußgänger ist. Eine derartige Abschätzung kann selbstverständlich bereits deutlich vor dem tatsächlichen Kollisionseintritt geschehen, indem beispielsweise ständig das Vorfeld des Kraftfahrzeugs überwacht wird. Auch Warnhinweise und dergleichen können mithin aus den Daten der optischen Erfassungseinrichtung abgeleitet werden, welche selbstverständlich ihre Messdaten grundsätzlich auch anderen Fahrzeugsystemen des Kraftfahrzeugs, die diese auswerten können, zur Verfügung stellen kann, beispielsweise auf die Längs- oder Querführung bezogene Fahrerassistenzsysteme und dergleichen. Wird, wie beschrieben wurde, ein Kollisionsobjekttyp ermittelt, kann dieser auch zur Anpassung wenigstens eines Kriteriums der Auslösebedingung verwendet werden, indem beispielsweise Schwellwerte, insbesondere auch der Höhenschwellwert, in Abhängigkeit von dem Kollisionsobjekttyp angepasst werden können und dergleichen.

Als Sicherheitssystem kann wenigstens eine anstellbare Motorhaube und/oder ein Windschutzscheiben-Außenairbag in Abhängigkeit der oder jeweils einer Auslösebedingung ausgelöst werden. Diese Beispiele für Sicherheitssysteme wurden bereits einleitend ausführlich beschrieben. Bezüglich des Höhenkriteriums ist es sowohl bei einer anstellbaren Motorhaube als auch bei einem Windschutzscheiben-Außenairbag sinnvoll, dieses in den jeweiligen Auslösebedingungen bzw. einer gemeinsamen Auslösebedingung zu berücksichtigen, nachdem das Höhenkriterium insbesondere bei wie beschrieben geeigneter Wahl des Höhenschwellwerts besonders dazu geeignet ist, abzuschätzen, ob ein Kollisionsobjekt überhaupt auf die Motorhaube bzw. Windschutzscheibe des Kraftfahrzeugs weiterbewegt wird.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines Kraftfahrzeugs,
- Fig. 2: eine schematische Seitenansicht des Kraftfahrzeugs und
- Fig. 3: einen Ablaufplan eines Ausführungsbeispiels des erfindungsgemäßen Verfahrens.

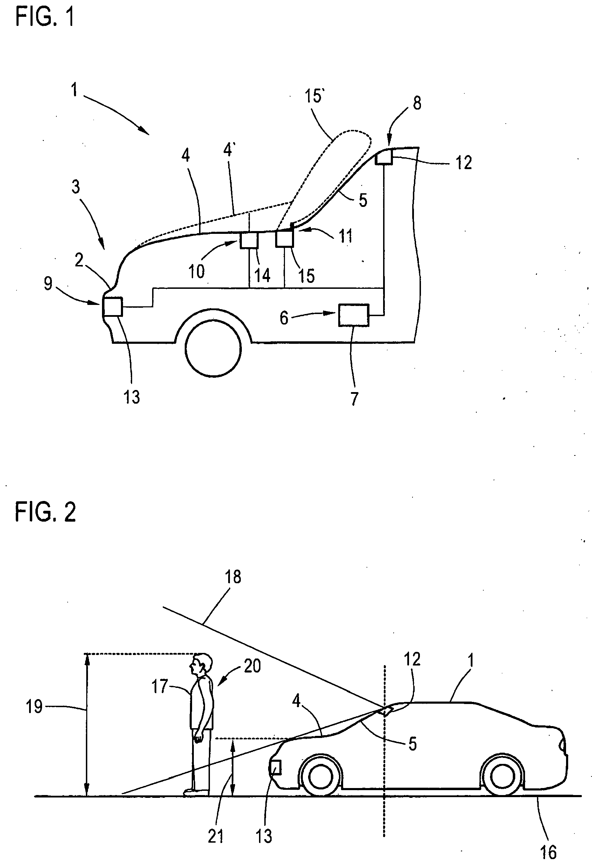

Fig. 1 zeigt eine Prinzipskizze eines Kraftfahrzeugs 1, genauer des vorderen Teils eines Kraftfahrzeugs 1. Dieses weist einen Stoßfänger 2 an seinem Frontend 3 auf. An das Frontend 3 schließt, wie grundsätzlich bekannt eine Motorhaube 4 an, die im Wesentlichen bis zu einer Windschutzscheibe 5 reicht.

Um Frontalkollisionen mit einem Fußgänger möglichst in ihrer Schwere mindern zu können, weist das Kraftfahrzeug 1 ein Fußgängerschutzsystem 6 mit einem Steuergerät 7 auf, das Messdaten verschiedener Erfassungseinrichtungen 8, 9 auswertet, um bei Erfüllung einer Auslösebedingung Sicherheitssysteme 10, 11 des Kraftfahrzeugs 1 auszulösen, wobei selbstverständlich auch jedem der Sicherheitssysteme 10, 11 eine eigene Auslösebedingung zugeordnet sein kann.

Als optische Erfassungseinrichtung 8 ist im vorliegenden Ausführungsbeispiel eine PMD-Kamera 12 vorgesehen. Als weitere Erfassungseinrichtung 9, die auf einem unterschiedlichen Messprinzip basiert, sind im Bereich des Stoßfängers 2 verschiedene Kollisionssensoren 13 angeordnet, die bei Kontakt mit einem Kollisionsobjekt entsprechende Messdaten liefern.

Als Sicherheitssysteme 10, 11 sind vorliegend zum einen eine anstellbare Motorhaube 4 mit entsprechenden Aktuatoren 14 sowie ein Windschutzscheiben-Außenairbag 15 vorgesehen. Bei Auslösen des Sicherheitssystems 10 wird die Motorhaube 4 wie durch die Position 4' angedeutet angestellt, bei Auslösen des Sicherheitssystems 11 wird der Außenairbag 15 zu der Form 15' derart aufgeblasen, dass die Windschutzscheibe 5 durch ihn überdeckt wird. Mithin wird ein Fußgänger, der über die Motorhaube 4 weiter in Richtung der Windschutzscheibe 5 bewegt wird, durch die angestellte Motorhaube 4 und den Außenairbag 15' abgefangen, so dass die Unfallfolgen gemindert werden.

Das Steuergerät 7 ist nun dazu ausgebildet, das erfindungsgemäße Verfahren auszuführen, das bedeutet, es werden durch das Steuergerät 7 die Daten der PMD-Kamera 12 derart ausgewertet, dass eine Höhe des Kollisionsobjekts bestimmt und mit einem Höhenschwellenwert verglichen werden kann, so dass sich ein Höhenkriterium im Rahmen der Auslösebedingung ergibt.

Genaues ist hierbei der Prinzipskizze der Fig. 2 zu entnehmen, welche das Kraftfahrzeug 1 auf einer Straße 16 fahrend zeigt. Die Situation ist kurz vor einer Kollision mit einem Fußgänger 17 dargestellt. Der Fußgänger 17 befindet sich ersichtlich im Erfassungsbereich 18 der PMD-Kamera 12. Nachdem diese nun auch Entfernungsinformationen liefert und die Gesamtgeometrie sowie die Position der PMD-Kamera 12 bekannt sind, kann die Höhe 19 des Fußgängers 17 als Kollisionsobjekt 20 aus den Messdaten der PMD-Kamera 12 bestimmt werden. Als. Höhenschwellwert zur Erfüllung des Höhenkriteriums ist dabei die Höhe 21 der vorderen Kante der Motorhaube 4 vorgesehen, das bedeutet, es wird überprüft, ob das Kollisionsobjekt 20 die Motorhaube 4 überragt.

Die PMD-Kamera 12 ist dafür in einer hervorragenden Position angeordnet, nachdem sie sich am oberen Rand der Windschutzscheibe 5 im Inneren des Kraftfahrzeugs 1 befindet. Erst bei der tatsächlichen Kollision sprechen dann die Kollisionssensoren 13 an.

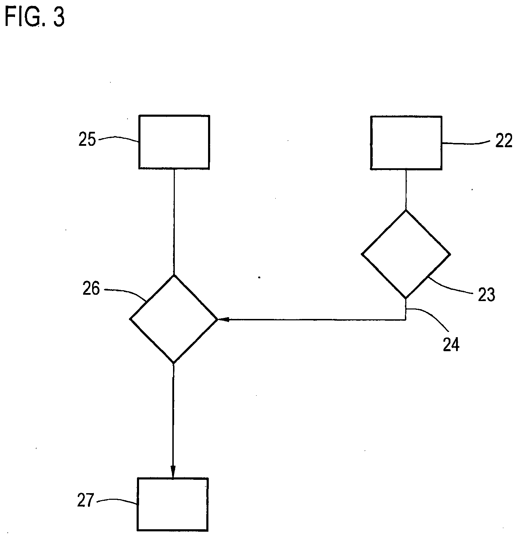

Fig. 3 zeigt nun, wie in einem Ausführungsbeispiel des erfindungsgemäßen Verfahrens das Höhenkriterium innerhalb der Auslösebedingung berücksichtigt werden kann. Dabei sei an dieser Stelle noch angemerkt, dass im dargestellten Ausführungsbeispiel des erfindungsgemäßen Verfahrens die Messdaten der PMD-Kamera 12 ohnehin ständig ausgewertet werden, um im Vorfeld des Kraftfahrzeugs 1 befindliche Objekte klassifizieren zu können, so dass die grundsätzliche Klassifikation eines Kollisionsobjekts 20 als Fußgänger bereits einen Einfluss auf im Rahmen der Auslösebedingung berücksichtigte Schwellwerte hat.

Die Messdaten 22 der PMD-Kamera 12 werden anhand des Höhenkriteriums 23 ausgewertet. Ist dieses erfüllt, Pfeil 24, werden Schwellwerte eines die Messdaten 25 der Kollisionssensoren 13 auswertenden Kriteriums 26 so angepasst, dass eine Auslösung, Schritt 27, der Sicherheitssysteme 10, 11 wahrscheinlicher wird, das bedeutet, die Schwelle für eine Auslösung der Sicherheitssysteme 10, 11 wird gesenkt. Das Höhenkriterium 23 dient mithin zur plausibilisierenden Anpassung des Kriteriums 26.

Selbstverständlich sind auch andere Möglichkeiten denkbar, innerhalb der Auslösebedingung das Höhenkriterium 23 zu berücksichtigen, beispielsweise UND-verknüpft mit dem die Messdaten 25 der Kollisionssensoren 13 auswertenden Kriterium 26.

Es sei noch darauf hingewiesen, dass selbstverständlich auch andere Arten von dreidimensionalen optischen Erfassungseinrichtungen 8 eingesetzt werden können, beispielsweise Stereokameras oder Monokameras mit nachgeschalteter Auswertungselektronik, die beispielsweise den Fluss der Messdaten zur Vermittlung einer Entfernung und somit auch einer Höhe auswerten können.

## Patentansprüche

1. Verfahren zum Betrieb eines Fußgängerschutzsystems (6) zur Unfallschwereminderung bei Frontalkollisionen mit Fußgängern (17) in einem Kraftfahrzeug (1), wobei wenigstens ein Sicherheitssystem (10, 11) in Abhängigkeit wenigstens einer Auslösebedingung, die Messdaten (22, 25) wenigstens einer Erfassungseinrichtung (8, 9) auswertet, ausgelöst wird, wobei die Auslösebedingung ein die Überschreitung eines Höhenschwellwerts durch wenigstens eine aus Messdaten (22) einer optischen Erfassungseinrichtung (8) bestimmte Höhe (19) eines Kollisionsobjekts (20) auswertendes Höhenkriterium (23) umfasst, wobei im Rahmen der Auslösebedingung Messdaten (22, 25) von wenigstens zwei auf unterschiedlichen Prinzipien basierenden Erfassungseinrichtungen (8, 9) ausgewertet werden,
**dadurch gekennzeichnet,**
**dass** bei Erfüllung des Höhenkriteriums (23) wenigstens ein Schwellwert eines die Messdaten (25) der weiteren Erfassungseinrichtung (9) betreffenden Kriteriums (26) der Auslösebedingung zum wahrscheinlicheren Auslösen des Sicherheitssystems (10, 11) angepasst wird, indem eine Schwelle für eine Auslösung, des Sicherheitssystems (10, 11) gesenkt wird.

2. Verfahren nach Anspruch 1,
**dadurch gekennzeichnet,**
**dass** die weitere Erfassungseinrichtung (9) ein bei Berührung mit dem Kollisionsobjekt (20) ansprechender Kollisionssensor (13) ist.

3. Verfahren nach Anspruch 1 oder 2,
**dadurch gekennzeichnet,**
**dass** der Höhenschwellwert als die Höhe (21) eines ausgezeichneten Punktes der Motorhaube (4) des Kraftfahrzeugs (1) über dem Boden gewählt wird, insbesondere eines vorderen Endes der Motorhaube (4).

4. Verfahren nach einem der vorangehenden Ansprüche,
**dadurch gekennzeichnet,**
**dass** als optische Erfassungseinrichtung (8) eine dreidimensionale optische Erfassungseinrichtung (8) verwendet wird, insbesondere eine PMD-Kamera (12) und/oder eine Stereokamera und/oder eine Monokamera mit einer den optischen Fluss der Messdaten (22) auswertenden Auswerteeinrichtung.

5. Verfahren nach einem der vorangehenden Ansprüche,
**dadurch gekennzeichnet,**
**dass** die optische Erfassungseinrichtung (8) im Bereich einer Windschutzscheibe (5) des Kraftfahrzeugs (1) angeordnet ist, insbesondere am oberen Rand der Windschutzscheibe (5) und/oder im Inneren des Kraftfahrzeugs (1).

6. Verfahren nach einem der vorangehenden Ansprüche,
**dadurch gekennzeichnet,**
**dass** aus den Messdaten (22) der optischen Erfassungseinrichtung (8) auch ein Kollisionsobjekttyp ermittelt und zur Anpassung wenigstens eines Kriteriums (23, 26) der Auslösebedingung verwendet wird.

7. Verfahren nach einem der vorangehenden Ansprüche,
**dadurch gekennzeichnet,**
**dass** als Sicherheitssystem (10, 11) wenigstens eine anstellbare Motorhaube (4) und/oder ein Windschutzscheiben-Außenairbag (15) in Abhängigkeit der oder jeweils einer Auslösebedingung ausgelöst werden.

## Claims

1. Method for operating a pedestrian protection system (6) for reducing accident severity in the case of frontal collisions with pedestrians (17) in a motor vehicle (1), wherein at least one safety system (10, 11) is triggered depending on at least one trigger condition, which evaluates measurement data (22, 25) of at least one detection device (8, 9) wherein the trigger condition comprises a height criterion (23) evaluating the exceeding of a height threshold value by at least a height (19) of a collision object (20) determined from measurement data (22) of an optical detection device (8) wherein measurement data (22, 25) of at least two detection devices (8, 9) based on different principles are evaluated in the context of the trigger condition,
**characterised in that** when the height criterion (23) is fulfilled, a threshold value of a criterion (26) concerning the measurement data (25) of the further detection device (9) is adapted to the trigger condition for more likely triggering the safety system (10, 11) by reducing a threshold for triggering the safety system (10, 11).

2. Method according to claim 1,
**characterised in that**
the further detection device (9) is a collision sensor (13) responding upon contact with the collision object (20).

3. Method according to claim 1 or 2,
**characterised in that**
the height threshold value is selected as the height (21) of a characteristic point of the engine bonnet (4) of the motor vehicle (1) above the ground, in particular a front end of the engine bonnet (4).

4. Method according to any one of the preceding claims,
**characterised in that**
a three-dimensional optical detection device (8) is used as the optical detection device (8), in particular a PMD camera (12) and/or a stereo camera and/or a monocamera with an evaluation device evaluating the optical flow of the measurement data (22).

5. Method according to any one of the preceding claims,
**characterised in that**
the optical detection device (8) is arranged in the region of a windscreen (5) of the motor vehicle (1), in particular at the upper edge of the windscreen (5) and/or in the inside of the motor vehicle (1).

6. Method according to any one of the preceding claims,
**characterised in that**
a type of collision object is also determined from the measurement data (22) of the optical detection device (8) and is used to adapt at least one criterion (23, 26) to the trigger condition.

7. Method according to any one of the preceding claims,
**characterised in that**
at least one adjustable engine bonnet (4) and/or a windscreen outer airbag (15) are triggered as the safety system (10, 11) depending on the or a trigger condition in each case.

## Revendications

1. Procédé de fonctionnement d'un système de protection de piétons (6) pour réduire la gravité d'un accident dans le cas de collisions frontales avec des piétons (17) dans un véhicule automobile (1), dans lequel au moins un système de sécurité (10, 11) est déclenché en fonction d'au moins une condition de déclenchement qui évalue des données mesurées (22, 25) d'au moins un dispositif de détection (8, 9), dans lequel la condition de déclenchement comprend un critère de hauteur (23) évaluant le dépassement d'une valeur de seuil de hauteur par au moins une hauteur (19), déterminée à partir de données mesurées (22) d'un dispositif de détection optique (8), d'un objet de collision (20) et dans lequel des données mesurées (22, 25) d'au moins deux dispositifs de détection (8, 9) basés sur des principes différents sont évaluées dans le cadre de la condition de déclenchement,
**caractérisé en ce que**,
lorsque le critère de hauteur (23) est satisfait, au moins une valeur de seuil d'un critère (26), concernant les données mesurées (25) de l'autre dispositif de détection (9), de la condition de déclenchement est adaptée en vue du déclenchement plus probable du système de sécurité (10, 11), un seuil pour un déclenchement du système de sécurité (10, 11) étant en fait abaissé.

2. Procédé selon la revendication 1,
**caractérisé en ce que**
l'autre dispositif de détection (9) est un capteur de collision (13) réagissant lors d'un contact avec l'objet de collision (20).

3. Procédé selon la revendication 1 ou 2,
**caractérisé en ce que**
la valeur de seuil de hauteur est choisie en tant que hauteur (21) d'un point caractéristique du capot (4) du véhicule automobile (1) au-dessus du sol, en particulier d'une extrémité avant du capot (4).

4. Procédé selon l'une des revendications précédentes,
**caractérisé en ce que**,
comme dispositif de détection optique (8), on utilise un dispositif de détection optique (8) en trois dimensions, en particulier une caméra PMD (12) et/ou une caméra stéréo et/ou une caméra mono avec un dispositif d'évaluation évaluant le flux optique des données mesurées (22).

5. Procédé selon l'une des revendications précédentes,
**caractérisé en ce que**
le dispositif de détection optique (8) est agencé dans la zone d'un pare-brise (5) du véhicule automobile (1), en particulier au niveau du bord supérieur du pare-brise (5) et/ou à l'intérieur du véhicule automobile (1).

6. Procédé selon l'une des revendications précédentes,
**caractérisé en ce que**,
à partir des données mesurées (22) du dispositif de détection optique (8), on détermine aussi un type d'objet de collision et on l'utilise en vue de l'adaptation d'au moins un critère (23, 26) de la condition de déclenchement.

7. Procédé selon l'une des revendications précédentes,
**caractérisé en ce que**,
comme système de sécurité (10, 11), on déclenche au moins un capot (4) déplaçable et/ou un airbag extérieur de pare-brise (15) en fonction de la condition de déclenchement ou d'une condition de déclenchement respective.
